# EUROPÄISCHE PATENTSCHRIFT

(11) **EP 2 605 942 B1**
(45) Veröffentlichungstag und Bekanntmachung des Hinweises auf die Patenterteilung: **09.07.2014**
(21) Anmeldenummer: 11736102.2
(22) Anmeldetag: 27.07.2011
(51) Int. Cl.: B60S 1/34, B60S 1/32

(54) **WISCHARM**
WIPER ARM
BRAS D'ESSUIE-GLACE

(30) Priorität: 19.08.2010 DE 102010039526
(43) Veröffentlichungstag der Anmeldung: 26.06.2013
(73) Patentinhaber: Robert Bosch GmbH, 70442 Stuttgart (DE)
(72) Erfinder: WEGNER, Norbert, 77815 Buehl (DE); WOLFGARTEN, Sven, 77815 Buehl (DE); KRAEMER, Godelieve, 76549 Huegelsheim (DE); KRUSE, Michael, 77815 Buehl (DE); BALINT, Agnes, H-8000 Szekesfehervar (HU)
(86) Internationale Anmeldenummer: PCT/EP2011/062888
(87) Internationale Veröffentlichungsnummer: WO 2012/022591

(56) Entgegenhaltungen:
- EP-A1- 0 525 850
- EP-A2- 0 299 708
- WO-A1-2010/009922
- US-A1- 2008 244 857

## Beschreibung

Die Erfindung betrifft einen Wischarm für eine Scheibenwischvorrichtung eines Kraftfahrzeugs mit einer ersten Aufnahme zur Befestigung des Wischarms an der Scheibenwischvorrichtung und einer zweiten Aufnahme zur Befestigung eines Wischblatts, wobei zwischen der ersten und der zweiten Aufnahme ein an die erste Aufnahme angrenzender steifer Wischarmbereich und ein an die zweite Aufnahme angrenzender elastischer Wischarmbereich angeordnet sind, wobei der steife Wischarmbereich ausgelegt ist, ein um eine Drehachse anliegendes Drehmoment des Wischarms zu übertragen und der elastische Wischarmbereich ausgelegt ist, eine Kraft zum Andrücken des Wischblatts an eine Windschutzscheibe bereitzustellen.

### Stand der Technik

Aus der EP 0 299 708 ist ein flexibel ausgestalteter Wischarm bekannt, der einteilig ausgestaltet ist. Der Wischarm umfasst eine erste Aufnahme zur Verbindung des Wischarms mit einem Wischerantrieb und eine zweite Aufnahme zur Befestigung eines Wischerblatts an dem Wischerarm. Zwischen der ersten Aufnahme und der zweiten Aufnahme weist der Wischarm zwei Bereiche auf, wobei einer der beiden Bereiche flexibel ausgestaltet ist, um das Wischerblatt an eine Windschutzscheibe eines Kraftfahrzeugs zu drücken.

Üblicherweise werden Frontscheibenwischer aus Metall gefertigt, um eine hohe Festigkeit des Wischerarms gegenüber auf ihn wirkende aerodynamische Kräfte abzustützen. Aus Metall hergestellte Wischarme sind jedoch durch die verschiedenen Stanz-, Biege-, Press- und/oder Montagevorgänge fertigungsaufwendig und können ferner nicht flexibel an ein Fahrzeugdesign bzw. an eine optimale aerodynamische Ausgestaltung angepasst werden.

### Offenbarung der Erfindung

Es ist Aufgabe der Erfindung, einen verbesserten Wischarm bereitzustellen, der insbesondere einfach herstellbar ist und optimal aerodynamisch ausgestaltbar ist.

Diese Aufgabe wird durch einen Wischarm gemäß Anspruch 1 gelöst. Vorteilhafte Ausführungsformen sind in den abhängigen Ansprüchen angegeben.

Erfindungsgemäß wird ein Wischarm für eine Scheibenwischvorrichtung eines Kraftfahrzeugs mit einer ersten Aufnahme zur Befestigung des Wischarms an der Scheibenwischvorrichtung und einer zweiten Aufnahme zur Befestigung eines Wischblatts vorgeschlagen. Zwischen der ersten und der zweiten Aufnahme ist ein an die erste Aufnahme angrenzender steifer Wischarmbereich und ein an die zweite Aufnahme angrenzender elastischer Wischarmbereich angeordnet. Der steife Wischarmbereich überträgt ein an einer Drehachse anliegendes Drehmoment des Wischarms. Der elastische Wischarmbereich stellt eine Kraft zum Andrücken des Wischblatts an eine Windschutzscheibe des Kraftfahrzeugs bereit. Der steife Wischarmbereich weist einen ersten Einleger und der elastische Wischarmbereich einen weiteren zweiten Einleger auf, wobei der erste Einleger von einer ersten Kunststoffumhüllung und der zweite Einleger von einer zweiten Kunststoffumhüllung umgeben ist, wobei die erste Kunststoffumhüllung eine zur zweiten Kunststoffumhüllung unterschiedliche Elastizität aufweist.

Durch diese Ausgestaltung wird ein Wischarm bereitgestellt, der einfach und kostengünstig herstellbar ist. So kann der Einleger des steifen bzw. des elastischen Wischarmbereichs in einem einzigen Zweikomponentenspritzgussvorgang mit Kunststoff umhüllt werden, so dass der Wischarm in wenigen Fertigungsschritten zu fertigen ist. Ferner kann der Wischarm zusätzlich an aerodynamische Gestaltungsvorschläge angepasst werden und somit ein verbessertes aerodynamisches Verhalten aufweisen.

In einer weiteren Ausführungsform der Erfindung weist der erste Einleger des steifen Wischarmbereichs einen bogenförmigen Querschnitt auf, wobei ein Mittelpunkt des bogenförmigen Querschnitts auf einer dem Wischblatt zugewandten Seite des ersten Einlegers angeordnet ist. Diese Ausgestaltung erhöht die Torsionssteifigkeit des steifen Wischarmbereichs und stellt zusätzlich ein erhöhtes Biegeträgheitsmoment bereit.

In einer weiteren Ausführungsform der Erfindung ist der zweite Einleger plattenförmig ausgeführt und im Wesentlichen in einer Rotationsebene um die Drehachse des Wischarms angeordnet. Diese Ausgestaltung gewährleistet, dass der zweite Einleger beispielsweise kostengünstig aus Streifenmaterial hergestellt werden kann, wobei eine Anordnung des ersten Einlegers in einer Rotationsebene um die Drehachse des Wischarms eine zuverlässige Übertragung des Drehmoments des Wischerantriebs bei gleichzeitig geringer Durchbiegung gewährleistet.

In einer weiteren Ausführungsform der Erfindung ist die erste Kunststoffumhüllung des ersten Einlegers des steifen Wischarmbereichs mittels eines Spritzgussverfahrens hergestellt ist, wobei der zweite Einleger des elastischen Wischarmbereichs von der zweiten Kunststoffumhüllung umgriffen ist und wobei die zweite Kunststoffumhüllung mittels einer Rastverbindung mit dem Einleger des elastischen Wischarmbereichs verbunden ist. Diese Ausgestaltung gewährleistet ebenso eine einfache Herstellungsmöglichkeit des Wischarms.

In einer weiteren Ausführungsform der Erfindung umfasst die materialeinheitliche Kunststoffumhüllung wenigstens einen der folgenden Werkstoffe: Polybutylenterephthalat (PBT), einem Polyacrylamid, Polyester (PE), Polycarbonat (PC), Polyarylamid (PAA). Diese Werkstoffe eignen sich insbesondere, um den Wischarm in einem Spritzgussverfahren kostengünstig herzustellen und Umwelteinflüssen, insbesondere UV-Strahlung, langfristig standzuhalten.

In einer weiteren Ausführungsform der Erfindung weist die zweite Kunststoffumhüllung einen Windabweiser auf, wobei der Windabweiser auf einer zum Wischblatt abgewandten Seite angeordnet ist. Diese Ausgestaltung ermöglicht das Aufbringen einer zusätzlichen Kraft auf den Wischarm, um das Wischblatt mittels aerodynamischer Kräfte beim Verfahren des Kraftfahrzeugs auf die Windschutzscheibe verstärkt anzudrücken.

In einer weiteren Ausführungsform der Erfindung ist der erste Einleger des steifen Wischarmbereichs und der zweite Einleger des elastischen Wischarmbereichs einteilig ausgeführt. Diese Ausgestaltungsform erleichtert zusätzlich die Herstellung des Wischarms.

In einer weiteren Ausführungsform der Erfindung weist der erste Einleger des steifen Wischarmbereichs einen ersten Kunststoff auf, wobei der zweite Einleger des elastischen Wischarmbereichs einen zweiten Kunststoff umfasst. Der erste Kunststoff und/oder der zweite Kunststoff umfasst wenigstens einen der folgenden Werkstoffe: einen faserverstärkt ausgeführten Kunststoff, insbesondere einen glasfaserverstärkten Kunststoff, einen kohlefaserverstärkten Kunststoff, einen langfasrig oder endlos ausgestalteten Kunststoff, ein Organofaserverbund, einen thermoplastischen Kunststoff. Dabei ist der erste Kunststoff des ersten Einlegers zu dem zweiten Kunststoff des zweiten Einlegers unterschiedlich gewählt. Diese Ausgestaltung ermöglicht eine exakte Anpassung der Einleger an die Belastung des jeweiligen Wischarmabschnitts sowie an die entsprechende Belastungsrichtung.

In einer weiteren Ausführungsform der Erfindung weist die Kunststoffumhüllung eine Schichtdicke auf, die im Wesentlichen größer als 0,5 mm ist. Diese Ausge staltung hat den Vorteil, dass für eine ansprechende Optik ausreichend Material um die Einleger des steifen bzw. elastischen Wischarmbereichs angeordnet ist, um die Kräfte und Momente im Wischarm ausreichend abzustützen. Ferner kann dadurch auch der Wischarm aerodynamisch optimiert ausgestaltet werden.

Nachfolgend wird die Erfindung anhand von Figuren näher erläutert. Es zeigen:
Figur 1 eine Explosionsdarstellung einer Scheibenwischvorrichtung mit einem Wischerarm;
Figur 2 eine perspektivische Ansicht des Wischerarms in zusammengebautem Zustand; und
Figur 3 einer Schnittdarstellung durch den in Figur 1 gezeigten Wischerarm.

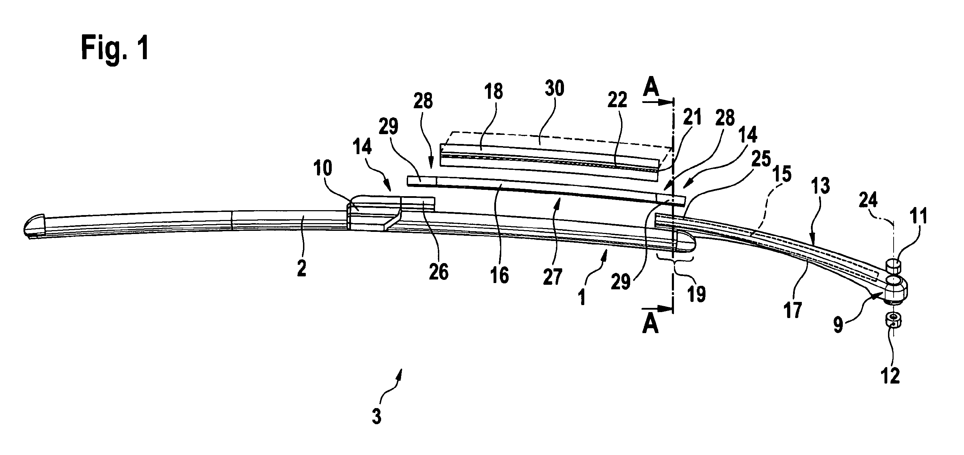

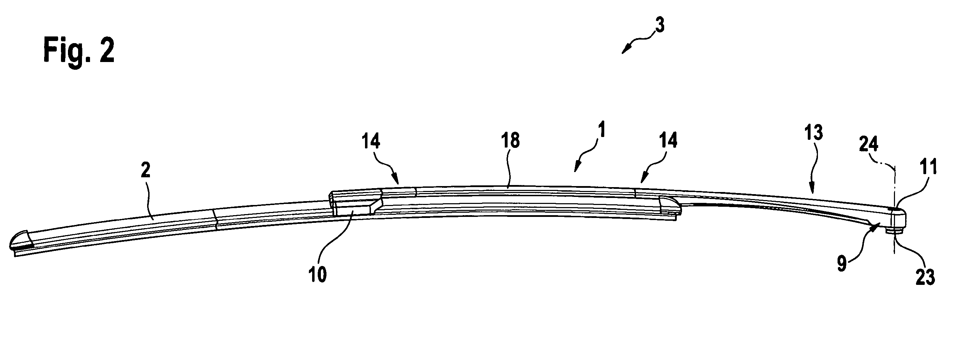

Figur 1 zeigt eine Explosionsdarstellung einer Scheibenwischvorrichtung 3 mit einem Wischarm 1. In Figur 2 ist eine perspektivische Darstellung des in Figur 1 gezeigten Wischarms 1 der Scheibenwischvorrichtung 3 in zusammengebautem Zustand dargestellt. Der Wischarm 1 weist eine erste Aufnahme 9 zur Befestigung des Wischarms 1 an einer nicht dargestellten Wischerwelle eines Scheibenwischantriebs auf. Am entgegengesetzten Ende zur ersten Aufnahme 9 ist am Wischarm 1 eine zweite Aufnahme 10 zur Befestigung eines Wischblattes 2 angeordnet. Zwischen der ersten Aufnahme 9 und der zweiten Aufnahme 10 grenzt ein steifer Wscharmbereich 13 an die erste Aufnahme 9 an. Zwischen der ersten und der zweiten Aufnahme 9, 10 ist an die zweite Aufnahme 10 angrenzend ein elastischer Wischarmbereich 14 angeordnet.

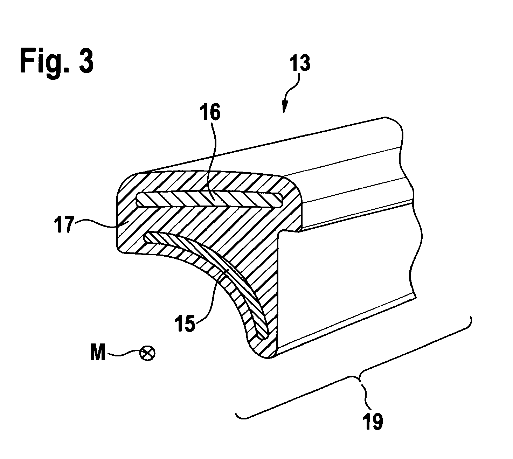

Die erste Aufnahme 9 für die Wischerwelle des Scheibenwischerantriebs umfasst einen Abdeckdeckel 11 und eine Wischerwellenaufnahme 12. Die Wischwellenaufnahme 12 ist dabei korrespondierend zu einer Drehachse 24 einer nicht dargestellten Wischerwelle ausgerichtet. Der Abdeckdeckel 11 verschließt die erste Aufnahme 9 in montiertem Zustand oberseitig gegen Umwelteinflüsse. Der an die erste Aufnahme 9 angrenzende steife Wischarmbereich 13 umfasst einen ersten Einleger 15, auf den detailliert in Figur 3 eingegangen wird. Der erste Einleger 15 des steifen Wischarmbereichs 13 und die Wischerwellenaufnahme 12 sind mit einer ersten Kunststoffumhüllung 17 umgeben. Der steife Wischerarmbereich 13 umfasst einen im Wesentlichen rechteckförmigen Querschnitt im Bereich der ersten Aufnahme 9. Der rechteckförmige Querschnitt geht in Richtung des elastischen Wischarmbereichs 16 in einen L-förmigen Querschnitt über, wodurch eine materialarme Ausgestaltung des steifen Wischarmbereichs 13 bereitgestellt wird.

Die zweite Aufnahme 10 weist zusammen mit dem Wischblatt 2 ein nicht dargestelltes Gelenk auf und befestigt das Wischblatt 2 über dieses Gelenk an dem Wischarm 1. Dabei ist die zweite Aufnahme 10 ebenso mit der ersten Kunststoffumhüllung 17 umgeben.

Der an den steifen Wischarmbereich 13 angrenzende elastische Wischarmbereich 14 umfasst einen zweiten Einleger 16. Der zweite Einleger 16 umfasst zwei Enden 29 und einen dazwischen angeordneten Mittelbereich 27. Dabei ist der zweite Einleger 16 des elastischen Wischarmbereichs 14 langgestreckt und plattenförmig ausgebildet und in einer Rotationsebene des Wischerarms 1 angeordnet. Um ein Abknicken des Wischarms 1 zu vermeiden, überlappen sich der erste Einleger 15 und der zweite Einleger 16 in einem Überlappungsbereich 19. Zur Befestigung des zweiten Einlegers 16 ist in der ersten Kunststoffumhüllung 17 eine erste Einlegeraufnahme 25 und an der zweiten Aufnahme 10 eine zweite Einlegeraufnahme 26 zur Aufnahme der Enden 29 des zweiten Einlegers 16 vorgesehen, so dass in zusammengebautem Zustand des Wischarms 1 der zweite Einleger 16 des elastischen Wischarmbereichs 14 durch die erste Kunststoffumhüllung 17 an den Enden 29 des zweiten Einlegers 16 und durch eine zweite Kunststoffumhüllung 18 im Mittelbereich 27 des zweiten Einlegers 16 umgeben ist. Dabei ist die zweite Einlegeraufnahme 26 der ersten Aufnahme 10 derart ausgebildet, dass ein Teilbereich der Aufnahme 10 ohne Verstärkung des zweiten Einlegers 16 ausgebildet ist. Diese Ausgestaltung ermöglicht eine optimale Gelenkausbildung zur Anbindung des Wischblatts 2 an der Aufnahme 10.

Die zweite Kunststoffumhüllung 18 ist in der Ausführungsform mit einer Nut 21 versehen, in der in zusammengebautem Zustand des Wischarms 1 der zweite Einleger 16 angeordnet ist. Die zweite Kunststoffumhüllung 18 weist ferner eine Rastverbindung 22 an einer Vorderkante auf, mit der die zweite Kunststoffumhüllung 18 des elastischen Wischarmbereichs 14 an dem zweiten Einleger 16 des elastischen Wscharmbereichs 14 im Mittelbereich 27 befestigt ist. Dabei umgreift die zweite Kunststoffumhüllung 18 den zweiten Einleger 16 vollständig, so dass der Werkstoff des zweiten Einlegers 16 gegenüber Witterungseinflüssen geschützt ist. Dabei weisen die erste Kunststoffumhüllung 17 und die zweite Kunststoffumhüllung 18 einen Kunststoff als Werkstoff auf.

Ferner umfasst die zweite Kunststoffumhüllung 18 einen Windabweiser 30 (gestrichelt dargestellt), der bei zunehmender Fahrtgeschwindigkeit das Wischblatt 2 verstärkt an eine Windschutzscheibe des Fahrzeugs andrückt. Dazu ist der Windabweiser oberseitig bzw. von einer dem Wischblatt 2 abgewandten Seite der zweiten Kunststoffumhüllung 18 angeordnet.

Die Kunststoffumhüllung 17, 18 des Wischarms 1 bietet eine flexible Ausgestaltung der Umfangskonturen des Wscharms 1. So können die Umfangskonturen der Kunststoffumhüllung 17, 18 beispielsweise einfach und kostengünstig an aerodynamische Anforderungen, insbesondere zur Reduzierung von Luftwirbeln und zur Erhöhung von Anpressdrücken, angepasst werden. Des Weiteren ist die Korrosionsbeständigkeit der Einleger 15, 16 durch die in den Figuren 1 und 2 gezeigte Ausführungsform insbesondere gegenüber Salz, UV-Bestrahlung sowie anderen korrosiven Medien verbessert.

Alternativ zu der in Figuren 1 und 2 gezeigten Ausführungsform des Wischarms 1 ist ferner denkbar, die zweite Kunststoffumhüllung 18 des elastischen Wischarmbereichs 14 auf den zweiten Einleger 16 des elastischen Wischarmbereichs 14 mittels eines Spritzgussverfahrens aufzubringen. Dabei ist denkbar, den zweiten Einleger 16 des elastischen Wischarmbereichs 14 und den ersten Einleger 15 des steifen Wischarmbereichs 13 sowie die Wischerwellenaufnahme 12 und die zweite Aufnahme 10 in eine Vorrichtung einer Spritzgussmaschine einzulegen und in einem Spritzgussvorgang vollständig mit Kunststoff zu umspritzen, so dass eine hohe Oberflächengüte gewährleistet wird und gleichzeitig die beiden Einleger 15, 16 des elastischen bzw. des steifen Wischarmbereichs 13, 14 formschlüssiger miteinander verbunden sind. Ferner wird durch diese Ausgestaltung ein leichter Wischarm 1 bereitgestellt, wodurch die Kräfte in dem Wischerantrieb reduziert sind. Zusätzlich sind Formübergänge zwischen der ersten Aufnahme 9 zum steifen Wischarmbereich 13, vom steifen Wischarmbereich 13 zum elastischen Wischarmbereich 14 sowie vom elastischen Wischarmbereich 14 zur zweiten Aufnahme 10 durch die Ausgestaltung vermindert oder gar nicht vorhanden. Des Weiteren ist denkbar, die Kunststoffumhüllung 17, 18 mit Farbpartikeln zu versehen, um den Wischarm 1 farblich an eine Fahrzeugfarbe des Kraftfahrzeugs anzupassen, so dass vorteilhafterweise auf eine Beschichtung des Wischarms 1 verzichtet werden kann.

Figur 3 zeigt einen Schnitt durch den in Figur 1 gezeigten Wischarm 1 entlang der in Figur 1 gezeigten Schnittlinie A-A. Die Schnittlinie A-A verläuft dabei durch den Überlappungsbereich 19 der beiden Einleger 15, 16. Von der ersten Kunststoffumhüllung 17 des steifen Wischarmbereichs 13 umhüllt, ist der erste Einleger 15 in dem steifen Wischarmbereich 13 angeordnet. Der erste Einleger 15 und der zweite Einleger 16 sind räumlich voneinander beabstandet angeordnet, wobei die beiden Einleger 15, 16 einen Einleger-Kunststoffverbund ausbilden. Der zweite Einleger 16 ist oberseitig in einer Rotationsebene um die in der Figur 2 gezeigte Drehachse 24 des Wischarms 1 angeordnet. Unterhalb des zweiten Einlegers 16 ist der erste Einleger 15 angeordnet, der einen bogensegmentförmigen Querschnitt aufweist, der einen Mittelpunkt M umfasst, der zum Wischblatt 2 zugewandten Seite bzw. auf der zum zweiten Einleger 16 abgewandten Seite angeordnet ist.

Diese Ausgestaltung des ersten Einlegers 15 bietet eine hohe Torsions- und Biegefestigkeit, um einen besonders steifen und auf Durchbiegung robusten steifen Wischarmbereich 13 bereitzustellen. Insbesondere wird eine Durchbiegung des steifen Wischarmbereichs 14 nach oben weg von der Windschutzscheibe vermieden.

In den in Figuren 1 bis 3 gezeigten Ausführungsformen sind die Einleger 15, 16 mit dem Kunststoff der ersten bzw. der zweiten Kunststoffumhüllung 17, 18 umgeben, wobei der Kunststoff Polybutylenterephthalat (PBT), Polyacrylamid, Polyester (PE), Polycarbonat (PC), Polyarylamid (PAA) aufweisen kann und insbesondere in einem Spritzgussverfahren um die Einleger 15, 16 aufgebracht werden kann. Der Kunststoff der Kunststoffumhüllung 17, 18 kann zusätzlich mit Fasern, insbesondere Glasfasern oder Kohlefasern verstärkt ausgebildet sein.

Für den ersten und den zweiten Einleger 15, 16 eignen sich als Werkstoff insbesondere Metalle, die gewalzt sind und eine hohe Festigkeit aufweisen. Für den zweiten Einleger 16 sind Werkstoffe geeignet, die im Allgemeinen für Federn, insbesondere für Blattfedern verwendet werden. Anstatt Metall als Werkstoff können auch für den ersten Einleger 15 ein erster Kunststoff und für den zweiten Einleger 16 ein zweiter Kunststoff verwendet werden, wobei der erste Kunststoff des ersten Einlegers 15 unterschiedlich zum zweiten Kunststoff des zweiten Einlegers 16 sein kann. Sowohl bei der Verwendung von Kunststoff als auch bei Metall für den ersten bzw. den zweiten Einleger 15, 16 können diese in sich verwunden geformt ausgebildet sein.

Als Werkstoffe für den ersten oder den zweiten Kunststoff des ersten Einlegers 15 bzw. des zweiten Einlegers 16 eignen sich insbesondere Organobleche, langfasrige oder endlosfasrige faserverstärkte thermo- oder duroplastische Kunststoffe, insbesondere glasfaser- und kohlefaserverstärkte Kunststoffe. Dabei ist es bei der Wahl des ersten und des zweiten Kunststoffs bzw. Werkstoffs von Vorteil, diesen auf die gewünschten Eigenschaften des elastischen bzw. des steifen Wischarmbereichs 13, 14 abzustimmen.

Ferner kann auch die Dicke des ersten Einlegers 15 zu dem zweiten Einlegers 16 variiert werden, um die Steifigkeit des steifen Wischarmbereichs 13 gegenüber dem elastischen Wischarmbereich 14 einzustellen. Auch ist denkbar, bei einer Verwendung von einem faserverstärkten ersten bzw. zweiten Kunststoff des ersten bzw. zweiten Einlegers 15, 16 eine unterschiedliche Anzahl von Lagen und Ausrichtungen der Fasern zu verwenden.

Alternativ sind auch andere Anordnungen und Ausbildungsformen der beiden Einleger 15, 16 denkbar. So ist etwa denkbar, dass die beiden Einleger 15, 16 einen L-förmigen, T-förmigen und/oder U-förmigen Querschnitt aufweisen. Auch ist denkbar, die Einleger 15, 16 einstückig und materialeinheitlich auszubilden.

Auch ist denkbar, dass die Wischerwellenaufnahme 12 einen dritten Kunststoff umfasst, wobei der dritte Kunststoff der Wischerwellenaufnahme 12 unterschiedlich zum ersten bzw. zweiten Kunststoff der beiden Einleger 15, 16 bzw. des Kunststoffs der Kunststoffumhüllungen 17, 18 ist. Alternativ ist denkbar, dass die Wischerwellenaufnahme 12 einteilig und/oder materialeinheitlich mit dem ersten Einleger 15 und gegebenenfalls mit dem zweiten Einleger 16 ausgebildet ist.

Ferner ist zusätzlich denkbar, den Bereich der ersten Aufnahme 9 der Rotationswelle die erste Kunststoffumspritzung 17 mit kurzfasrigen Fasern zu verstärken, um einen verbesserten Aufbau des steifen Wischarmbereichs 13 zu erreichen.

## Patentansprüche

1. Wischarm (1) für eine Scheibenwischvorrichtung (3) eines Kraftfahrzeugs mit einer ersten Aufnahme (9) zur Befestigung des Wischarms (1) an der Scheibenwischvorrichtung (3) und einer zweiten Aufnahme (10) zur Befestigung eines Wischblatts (2), wobei zwischen der ersten und der zweiten Aufnahme (9, 10) ein an die erste Aufnahme (9) angrenzender steifer Wischarmbereich (13) und ein an die zweite Aufnahme (10) angrenzender elastischer Wischarmbereich (14) angeordnet sind, wobei der steife Wischarmbereich (13) ausgelegt ist, ein um eine Drehachse (24) des Wischarm (1) anliegendes Drehmoment zu übertragen und der elastische Wischarmbereich (14) ausgelegt ist, eine Kraft zum Andrücken des Wischblatts (2) an eine Windschutzscheibe bereitzustellen, **dadurch gekennzeichnet, dass** der steife Wischarmbereich (13) einen ersten Einleger (15) und der elastische Wischarmbereich (14) einen zweiten Einleger (16) aufweist, wobei der erste Einleger (15) von einer ersten Kunststoffumhüllung (17) und der zweite Einleger (16) von einer zweiten Kunststoffumhüllung (18) umgeben sind ist, wobei die erste Kunststoffumhüllung (17) eine zur zweiten Kunststoffumhüllung (18) unterschiedliche Elastizität aufweist.

2. Wischarm (1) nach Anspruch 1, **dadurch gekennzeichnet, dass** der erste Einleger (15) des steifen Wischarmbereichs (13) einen bogenförmigen Querschnitt aufweist, wobei ein Mittelpunkt (M) des bogenförmigen Querschnitts auf einer dem Wischblatt (2) zugewandten Seite des ersten Einlegers (15) angeordnet ist.

3. Wischarm (1) nach Anspruch 1 oder 2, **dadurch gekennzeichnet, dass** der zweite Einleger (16) des elastischen Wischarmbereichs (14) plattenförmig und langgestreckt ausgebildet und im Wesentlichen in einer Rotationsebene um die Drehachse (24) des Wscharms (1) angeordnet ist.

4. Wischarm (1) nach einem der Ansprüche 1 bis 3, **dadurch gekennzeichnet, dass** die erste Kunststoffumhüllung (17) des ersten Einlegers (15) des steifen Wischarmbereichs (13) mittels eines Spritzgussverfahrens hergestellt ist, wobei der zweite Einleger (16) des elastischen Wischarmbereichs (14) von einer zweiten Kunststoffumhüllung (18) umgriffen ist, und wobei die zweite Kunststoffumhüllung (18) mittels einer Rastverbindung (22) mit dem zweiten Einleger (16) des elastischen Wischarmbereichs (14) verbunden ist.

5. Wischarm (1) nach einem der Ansprüche 1 bis 4, **dadurch gekennzeichnet, dass** die erste und/oder die zweite Kunststoffumhüllung (17, 18) wenigstens einen der folgenden Werkstoffe umfasst: Polybutylenterephthalat (PBT), einem Polyacrylamid, Polyester (PE), Polycarbonat (PC), Polyarylamid (PAA).

6. Wischarm (1) nach Anspruch 4 oder 5, **dadurch gekennzeichnet, dass** die zweite Kunststoffumhüllung (18) einen Windabweiser (30) aufweist, wobei der Windabweiser (30) auf einer zum Wischblatt (2) abgewandten Seite angeordnet ist, und ausgelegt ist, eine zusätzliche Kraft zum Andrücken des Wischblatts (2) an dem Wischarm (1) bereitzustellen.

7. Wischarm (1) nach einem der Ansprüche 1 bis 6, **dadurch gekennzeichnet, dass** der erste Einleger (15) des steifen Wischarmbereichs (13) und der zweite Einleger (16) des elastischen Wischarmbereichs (14) einteilig ausgeführt ist.

8. Wischarm (1) nach einem der Ansprüche 1 bis 7, **dadurch gekennzeichnet, dass** der erste Einleger (15) des steifen Wischarmbereichs (13) einen ersten Kunststoff aufweist, wobei der zweite Einleger (16) des elastischen Wischarmbereichs (14) einen zweiten Kunststoff aufweist, wobei der erste Kunststoff und/oder der zweite Kunststoff wenigstens einen der folgenden Werkstoffe umfasst: einen faserverstärkt ausgeführten Kunststoff, insbesondere einen glasfaserverstärkten Kunststoff, einen kohlefaserverstärkten Kunststoff, einen langfasrig oder endlos faserverstärkter ausgestalteten Kunststoff, ein Organofaserverbund, einen thermoplastischen Kunststoff, wobei der erste Kunststoff ersten Einlegers (15) zu dem zweiten Kunststoff zweiten Einlegers (16) unterschiedlich ist.

9. Wischerarm (1) nach einem der Ansprüche 1 bis 8, **dadurch gekennzeichnet, dass** die Kunststoffumhüllung (17, 18) eine Schichtdicke aufweist, die größer als 0,5 mm ist.

## Claims

1. Wiper arm (1) for a window wiper device (3) of a motor vehicle, with a first receptacle (9) for fastening the wiper arm (1) to the window wiper device (3) and with a second receptacle (10) for the fastening of a wiper blade (2), wherein a stiff wiper arm region (13) adjacent to the first receptacle (9) and an elastic wiper arm region (14) adjacent to the second receptacle (10) are arranged between the first and the second receptacle (9, 10), wherein the stiff wiper arm region (13) is designed in order to transmit a torque applied about an axis of rotation (24) of the wiper arm (1), and the elastic wiper arm region (14) is designed to provide a force for pressing the wiper blade (2) against a windscreen, **characterized in that** the stiff wiper arm region (13) has a first insert (15) and the elastic wiper arm region (14) has a second insert (16), wherein the first insert (15) is surrounded by a first plastics covering (17) and the second insert (16) is surrounded by a second plastics covering (18), wherein the first plastics covering (17) has a different elasticity from the second plastics covering (18).

2. Wiper arm (1) according to Claim 1, **characterized in that** the first insert (15) of the stiff wiper arm region (13) has an arcuate cross section, wherein a centre point (M) of the arcuate cross section is arranged on a side of the first insert (15) facing the wiper blade (2).

3. Wiper arm (1) according to Claim 1 or 2, **characterized in that** the second insert (16) of the elastic wiper arm region (14) is of plate-like and elongate design and is substantially arranged in a rotational plane about the axis of rotation (24) of the wiper arm (1).

4. Wiper arm (1) according to one of Claims 1 to 3, **characterized in that** the first plastics covering (17) of the first insert (15) of the stiff wiper arm region (13) is produced by means of an injection-moulding process, wherein the second insert (16) of the elastic wiper arm region (14) is embraced by a second plastics covering (18), and wherein the second plastics covering (18) is connected to the second insert (16) of the elastic wiper arm region (14) by means of a latching connection (22).

5. Wiper arm (1) according to one of Claims 1 to 4, **characterized in that** the first and/or the second plastics covering (17, 18) comprises at least one of the following materials: polybutylene terephthalate (PBT), a polyacrylamide, polyester (PE), polycarbonate (PC), polyarylamide (PAA).

6. Wiper arm (1) according to Claim 4 or 5, **characterized in that** the second plastics covering (18) has a wind deflector (30), wherein the wind deflector (30) is arranged on a side facing away from the wiper blade (2) and is designed to provide an additional force for pressing the wiper blade (2) against the wiper arm (1).

7. Wiper arm (1) according to one of Claims 1 to 6, **characterized in that** the first insert (15) of the stiff wiper arm region (13) and the second insert (16) of the elastic wiper arm region (14) are designed as a single part.

8. Wiper arm (1) according to one of Claims 1 to 7, **characterized in that** the first insert (15) of the stiff wiper arm region (13) comprises a first plastic, wherein the second insert (16) of the elastic wiper arm region (14) comprises a second plastic, wherein the first plastic and/or the second plastic comprises at least one of the following materials: a plastic of fibre-reinforced design, in particular a glass-fibre-reinforced plastic, a carbon-fibre-reinforced plastic, a plastic of long-fibre or endlessly fibre-reinforced configuration, an organo fibre composite, a thermoplastic, wherein the first plastic of the first insert (15) differs from the second plastic of the second insert (16).

9. Wiper arm (1) according to one of Claims 1 to 8, **characterized in that** the plastics covering (17, 18) has a layer thickness which is greater than 0.5 mm.

## Revendications

1. Bras d'essuie-glace (1) pour un dispositif d'essuie-glace (3) d'un véhicule automobile, comprenant un premier logement (9) pour la fixation du bras d'essuie-glace (1) sur le dispositif d'essuie-glace (3) et un deuxième logement (10) pour la fixation d'un balai d'essuie-glace (2), une région de bras d'essuie-glace rigide (13) adjacente au premier logement (9) et une région de bras d'essuie-glace élastique (14) adjacente au deuxième logement (10) étant disposées entre le premier et le deuxième logement (9, 10), la région de bras d'essuie-glace rigide (13) étant conçue pour transmettre un couple s'appliquant autour d'un axe de rotation (24) du bras d'essuie-glace (1) et la région de bras d'essuie-glace élastique (14) étant conçue pour fournir une force d'application du balai d'essuie-glace (2) contre un pare-brise, **caractérisé en ce que** la région de bras d'essuie-glace rigide (13) présente un premier dispositif d'insertion (15) et la région de bras d'essuie-glace élastique (14) présente un deuxième dispositif d'insertion (16), le premier dispositif d'insertion (15) étant entouré par une première gaine en plastique (17) et le deuxième dispositif d'insertion (16) étant entouré par une deuxième gaine en plastique (18), la première gaine en plastique (17) présentant une élasticité différente de celle de la deuxième gaine en plastique (18).

2. Bras d'essuie-glace (1) selon la revendication 1, **caractérisé en ce que** le premier dispositif d'insertion (15) de la région de bras d'essuie-glace rigide (13) présente une section transversale de forme courbe, un centre (M) de la section transversale de forme courbe étant disposé sur un côté du premier dispositif d'insertion (15) tourné vers le balai d'essuie-glace (2).

3. Bras d'essuie-glace (1) selon la revendication 1 ou 2, **caractérisé en ce que** le deuxième dispositif d'insertion (16) de la région de bras d'essuie-glace élastique (14) est réalisé sous forme de plaque et sous forme allongée, et est disposé essentiellement dans un plan de rotation autour de l'axe de rotation (24) du bras d'essuie-glace (1).

4. Bras d'essuie-glace (1) selon l'une quelconque des revendications 1 à 3, **caractérisé en ce que** la première gaine en plastique (17) du premier dispositif d'insertion (15) de la région de bras d'essuie-glace rigide (13) est fabriquée au moyen d'un procédé de moulage par injection, le deuxième dispositif d'insertion (16) de la région de bras d'essuie-glace élastique (14) étant engagé sur son pourtour par une deuxième gaine en plastique (18), et la deuxième gaine en plastique (18) étant connectée au deuxième dispositif d'insertion (16) de la région de bras d'essuie-glace élastique (14) au moyen d'une connexion par encliquetage (22).

5. Bras d'essuie-glace (1) selon l'une quelconque des revendications 1 à 4, **caractérisé en ce que** la première et/ou la deuxième gaine en plastique (17, 18) comprennent au moins l'un des matériaux suivants : du téréphtalate de polybutylène (PBT), un polyacrylamide, un polyester (PE), un polycarbonate (PC), un polyarylamide (PAA).

6. Bras d'essuie-glace (1) selon la revendication 4 ou 5, **caractérisé en ce que** la deuxième gaine en plastique (18) présente un déflecteur de vent (30), le déflecteur de vent (30) étant disposé sur un côté opposé au balai d'essuie-glace (2) et étant conçu de manière à fournir une force supplémentaire pour l'application du balai d'essuie-glace (2) contre le bras d'essuie-glace (1).

7. Bras d'essuie-glace (1) selon l'une quelconque des revendications 1 à 6, **caractérisé en ce que** le premier dispositif d'insertion (15) de la région de bras d'essuie-glace rigide (13) et le deuxième dispositif d'insertion (16) de la région de bras d'essuie-glace élastique (14) sont réalisés d'une seule pièce.

8. Bras d'essuie-glace (1) selon l'une quelconque des revendications 1 à 7, **caractérisé en ce que** le premier dispositif d'insertion (15) de la région de bras d'essuie-glace rigide (13) présente un premier plastique, le deuxième dispositif d'insertion (16) de la région de bras d'essuie-glace élastique (14) présentant un deuxième plastique, le premier plastique et/ou le deuxième plastique comprenant au moins l'un des matériaux suivants : un plastique réalisé de manière renforcée par des fibres, en particulier un plastique renforcé par des fibres de verre, un plastique renforcé par des fibres de carbone, un plastique renforcé par des fibres longues ou renforcé par des fibres sans fin, un composite de fibres organiques, un plastique thermoplastique, le premier plastique du premier dispositif d'insertion (15) étant différent du deuxième plastique du deuxième dispositif d'insertion (16).

9. Bras d'essuie-glace (1) selon l'une quelconque des revendications 1 à 8, **caractérisé en ce que** la gaine en plastique (17, 18) présente une épaisseur de couche supérieure à 0,5 mm.
